# EUROPEAN PATENT APPLICATION

(11) **EP 1 374 664 A1**
(43) Date of publication of application: **02.01.2004**
(21) Application number: 03425423.5
(22) Date of filing: 27.06.2003
(51) Int. Cl.: A01F 15/08

(54) **Round baler and processing machine**

(30) Priority: 28.06.2002 IT RM20020351
(71) Applicant: Gallignani S.p.A., 48026 Russi (Ravenna) (IT)
(72) Inventor: Ravaglia, Paolo, 48012 Bagnacavallo RA (IT)
(74) Representative: Leone, Mario

(57) **Abstract**

The present invention relates to a round baler for dry and/or green crop produce including a forming chamber (1), a feeding platform and bale (8) rotation means and mechanisms having at least two drive rolls (3) that cause, via the drive belt (9) for dragging the same bale (6,8), a geometric shape reducing the size of the chamber at the bale forming step, to activate the rotation of said bale (6) at its starting forming step.

## Description

The present invention relates to a round baler, and, in particular, to a bale forming and shaping mechanisms in the presence of dry as well as of green produce.

A classic automatic round baler has a baling chamber, or baling room, extending longitudinally with respect to the direction of motion of the baler. Along a side of the baling chamber, there is an inlet section for the crop, whereas in the bale forming chamber there are chain, belt and/or roller means for rotating the bale so that the progressively fed layers wind up on those already therein with an even and required compression according to the crop material, like hay, straw or the like. Incidentally, the crop after having being picked up from the ground by means of a collecting mechanism, is conveyed through the feeding platform to the inlet of the bale forming chamber, with the aid of already known suitable feeding means.

Upon forming each bale, the same is automatically tied and/or wrapped with a polymeric net and then is discharged on the ground behind the baler, or on a wagon or cart.

It has to be pointed out that in the present art different types of bale forming mechanisms have been already employed for the fixed chamber baling machines and in the variable chamber baling machines or balers.

Some round balers, e.g. as described in EP 0339730, use roller means and chain means arranged on a specific location in order to follow the bale shaping from the start to the end of the formation.

On the other hand, it has to be pointed out that several known round balers in the market are capable of attaining substantially the same results with the use of a plurality of chain, slat apron, belt and roller forming means, to which specific operative locations are associated with the use of articulation and anchorage systems, e.g. according to what is described in EP0296665.

All of these abovementioned European patents, show and claim combinations of means and mechanisms that are not always apt to form bales of an optimal uniformity and compaction and perfectly shaped. Such solutions have a first drawback which lie in a too large bale starting chamber. Therefore, there subsists the difficulty of starting the rotation of the first layers of collected material. It is known to those skilled in the art that a large bale starting chamber entails a scanty compression of the first core of the bale which leads to a reduced density of the same core.

Further, in said known solutions, there occur outer surfaces of the so obtained bales exhibiting uneven and ragged shapes with loss of produce between the rollers, particularly in the case of green produce.

Moreover, it has to be pointed out that, according to what is known, to date all the crop bale shaping and forming operating means and relevant mechanisms have been satisfactorily accepted. However, there is an increasing demand by farmers and agricultural operators for more cost-effective and efficient crop balers. Several of the various known bale forming and shaping mechanisms and means have a relatively limited operating capacity, which at present is deemed insufficient. Specifically, this is particularly true with a roller and belt means with a single drive roll, and with a bale starting chamber having an excessive volume.

Bale shaping is known to be a significant problem for hay and straw harvesters, related to the bale rotation starting means. It has to be pointed out that the attainment of a bale of uniform density having an even cylindrical shape with a smoother and compact outer shape is particularly important in order to render the same weatherproof, and to improve the end product quality. On the contrary, the deformed bales and those having irregular shape and density, generally tend to disintegrate during a further handling thereof.

It was found that, with the forming mechanisms of the state of the art, the final density and the shape of the produced bales are related to the variations occurring in the type of crop, moisture content and dimensions thereof. Thus, an unsatisfactory bale shape with very uneven side edges is attained.

The main object of the present invention is to avoid or attenuate one or more of the aboveindicated disadvantages.

Another object of the present invention is to obtain the rotation of the bale from the very start of its forming, so that the subsequently fed layers wind up on those layers already in the chamber, in order to generate a good compression of the first core of the bale and advantageously a high density of said core.

A further object of the present invention is to increase the compactness of the outer layers of the bale, in particular with dry produce (straw) for rendering the same weatherproof, and to improve the end product quality, as a smoother and compacter outer surface is obtained.

Hence, the main object of the present invention is to produce a structured crop bale having a sufficiently homogeneous density and with a durable shape stability, avoiding the drawbacks and the disadvantages related to the current implementations advanced by the art and partly indicated in the foregoing.

Said objects are attained by the present invention which provides a round baler including at least two drive rolls and at least one drive belt deflector roll, and said drive and deflector rolls are mounted to sensibly reduce the volume of the bale starting chamber, in order to activate the rotation of the bale itself at its forming step.

According to a first embodiment, the median drive roll mounted between the top drive roll and the bottom guide and idler roll, is forwardly positioned both with respect to the top drive roll and to the bottom idler roll, and lies near a set of front rolls being preferably installed at a fixed position.

Due to the implementation of said median drive roll, the same pulls the drive belt for any bale diameter, and at the same time, it is provided at a proximal position thereof a counter-rotating bladed roll for the removing of material that tends to build up thereon by the winding motion.

Hereinafter, will be given a detailed description of a preferred embodiment of the round baler of the present invention, for illustrative purposes and given as a non limiting example, by making reference to the annexed drawings wherein:

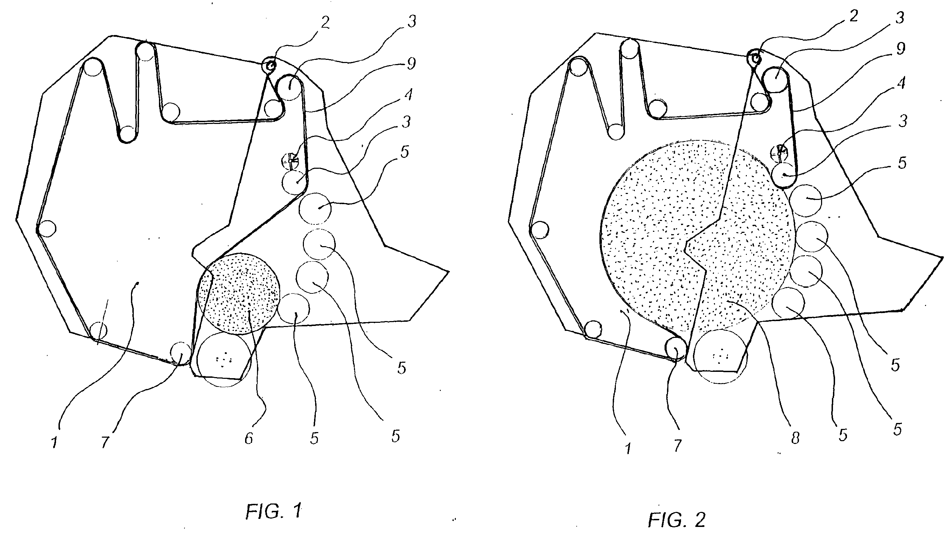

Figure 1 is a side view, which schematically shows the bale forming starting step of the crop material in the round baler according the present invention, the core material being wound up and compacted by the drive belt driven by the drive rolls; and
Figure 2 is a side view schematically showing the bale forming ending step of the crop material in the round baler of the present invention, the material being wound up and compacted in its outer layers by the drive belt driven by the drive rolls.

For the sake of clarity, in the figures corresponding parts or having the same functions will have same reference numbers.

Further, for overall clarity, in the figures and in the description all the mechanical members and relevant devices and/or the leverages which cooperate with the means for forming the bale of the present invention, are omitted and therefore not described in detail since forming part of the art and therefore unnecessary to understand the operation of the present invention.

Thus, e.g. the material feeding platform, as well as the feeding mechanisms associated to the feeding platform and to the crop material bale chamber are not herewith shown, being all known to the art.

According to the invention, 1 is a structural movable half-shell for shielding the operating devices of the round baler and pressing machine for the production of a round bale 8. A shaft pin 2 is provided for pivotally articulating the half-shell 1 from the fixed carter of the round baler and pressing machine in a substantially known manner. More precisely, the substantially polygon-shaped half-shell 1 can pivot about the pin 2, preferably by means of a fluid dynamic action of a jack, which is operated in particular at the discharging of the round bale 8 at the final forming step thereof. Drive rolls 3 drag in rotation the crop material bale 6 via a wound up belt/belts 9 from the forming starting step to the final forming step, i.e. the bale 8 with a maximum diameter. A counter-rotating bladed roll 4 is mounted nearby the belts 9 for the removal of the fluff/material that during the winding tends to build up on the median drive roll 3.

Advantageously, said roll 4 is rotatable mounted parallel to the drive roll 3, and preferably the longitudinal star-shaped blades thereof are apt to counter-rotate cooperating with the surface of the drive roll 3 in order to graze the surface of the latter and to remove the material wound therein by centrifugal action. Incidentally, said counter-rotation is preferably originated by a coupling of mutually meshing gears splined to both the shaft of the median drive roll 3 and to the shaft of the bladed roll 4. A multiplicity of front rolls 5 is provided, preferably mounted in a free rotatable manner on relevant pins at preset positions. Said front rolls 5 are subjected to the pressure and sliding contact of the crop material bale 8 during its forming up to the maximum diameter thereof. As is evident from the figures, when starting the bale formation of crop material 6, the same is dragged in rotation and advantageously pressed from the very first forming layers by the drive belts 9, the latter being arranged in such a way to render minimal the initial size of the bale forming chamber by the drive rolls 3, and according to the present invention. A bottom idler or guide roll 7 of the drive belt 9 is driven by the drive rolls 3. At the final forming step the bale 8 has its maximum diameter. The belts 9 are suitable to follow the surface of the bale 8 during its forming, and at the same time pressing the same.

The operation of the round baler and presser and the function of all the rotating means which cooperate in the forming of the round bale 8 of crop material according to the present invention, will be easily apparent from the annexed drawings. Further, according to the invention the operating of the round baler is extremely easy to make, apply and use.

For the functioning, at first the round baler is started. Then, the feeding mechanism is activated by connecting the baler to a tractor (not shown in the figures).

Then, the feeding mechanism starts to convey the crop material in the forming chamber arranged in the starting size and by rotating the initial layers of the starting bale 6, so that the subsequently fed layers will wind up on those layers already inserted and obtaining a sufficient compacting thereof. At this stage, the forming chamber is "wedge-shaped" and its shape is obtained by the forward position of the drive belt 9 with respect to the drive rolls 3.

The applicant of the present invention tested that by reducing the initial volume of the bale forming chamber, the starting rotation of the bale 6 is optimised from the very first layers, that are thus compressed to yield an elevated density of the core thereof.

With the presence of the median drive roll 3 the starting forming of the bale 6 is markedly facilitated, in particular when handling green produce. Further, the arrangement of the drive belts 9 that wind up externally onto the median drive roll 3, allow to improve the compactness of the outer layers of the so forming bale 8, in particular when handling dry produce such as hay or the like, to render the bale 8 weatherproof and to sensibly increase the product quality.

The addition of a further drive roll 3 and, therefore, the presence of at least two drive rolls 3 promotes the start of the rotation of the very first layers conveyed to forming the bale 6, and the drive belts 9 press the crop material right from the start, to form a compacter and harder bale core.

The arrangement of the median drive roll 3 allows mounting of the already known belt tensioner (not shown in the drawings) at an optimal position, to generate the appropriate tension for any diameter of the bale 8 and in particular from the very stating forming step of the bale 6.

Incidentally, the present applicant tested that the median drive roll 3 is mounted at a preset position so that when the bale 8 reaches a size equal to about the 75% of the final size, the former interferes with the ideal contour thereof. All this is very advantageous when a dry produce is baled. More specifically, in such a preset position of the median drive roll 3, the outer layers of the bale 8 are markedly compressed and the crop material is compacted. The rolling action of the roll 3 involves the outer portion of the bale 8, and added to the compressing action of the drive belts 9 the same originates a smoother and compacter outer surface.

Moreover, the present applicant detected during the tests that for large bale diameters the median drive roll 3 forces the crop material to stay compact by elastic hysteresis, until the adjacent roll 5 contacts the surface. This causes a lesser loss of crop material in the gaps between rolls and drive belts 9.

According the invention, the drive rolls 3 can be motor-driven with the same transmission driven by a single power supply.

On the other hand, when handling green crop material a single drive roll 3 does not suffice to appropriately rotate the bale 8, since the friction against the sidewalls of the forming chamber is very high. Test conducted at open-field showed that green material tends to stick due to its sugary component. Further, in particularly when handling green material, a single motor-driven roll 3 does not suffice to keep in motion the drive belts 9 without harmful slippage.

By adopting a further drive roll 3, it is guaranteed that the belts 9 can be revolved against the friction of the bale 8 which is being formed, and for all maximum diameters.

It will be apparent that, upon having formed a round bale 8 of a maximum diameter, by means of already known transmission and actuating means, there is activated the discharge step of the same bale 8, both on the ground behind the present round baler and pressing machine, or on a cart.

It has to be pointed out that to the present invention several modifications may be effected, concerning the shape and the arrangement of the bale forming rolls and belts both for dry and/or for green crop material, without thereby departing from the spirit of the invention and comprised within the scope of the annexed claims.

## Claims

1. A round baler comprising a bale forming chamber, a feeding platform opened onto the latter and a feeding mechanism associated to the feeding platform and to the bale forming chamber, for feeding the crop material through the feeding platform to the bale forming chamber,
**characterised in that** the rotation means in the bale forming chamber comprises at least two drive rolls (3) arranged in order to form, together with a wound drive belt (9) for dragging a bale (6,8), a geometric configuration for varying the size of the forming chamber at the starting bale forming step, and for activating the rotation of the said bale (6).

2. The round baler according to claim 1, **characterised in that** one of at least two drive roll (3) is mounted at a middle position between a top drive roll (3) and a bottom guide roll (7) in a forward position with respect to both said top drive roll (3) and said bottom guide roll (7), and **in that** said median drive roll (3) lies near a multiplicity of front rolls (5), the latter being preferably installed in a preset position.

3. The round baler according to claims 1 and 2, **characterised in that** said median drive roll (3) is a tensioner roll for said drive belt (9) for any diameter of the bale (6,8), in particular from the starting forming step of said bale (6).

4. The round baler according to any of claims 1, 2 or 3, **characterised in that** said median drive roll (3) cooperates with a counter-rotating bladed roll (4) mounted in a proximal grip position, for the removal of material build up thereon.
